# EUROPEAN PATENT SPECIFICATION

(11) **EP 2 366 607 B1**
(45) Date of publication and mention of the grant of the patent: **13.05.2015**
(21) Application number: 10425079.0
(22) Date of filing: 19.03.2010
(51) Int. Cl.: B62D 33/06

(54) **Vehicle cabin with telescopic rear part, especially of industrial or commercial vehicle**
Fahrzeugkabine mit teleskopischem Hinterteil, insbesondere von Industrie- und Nutzfahrzeugen
Cabine de véhicule dotée d'une partie arrière télescopique, en particulier pour un véhicule industriel ou commercial

(43) Date of publication of application: 21.09.2011
(73) Proprietor: Iveco S.p.A., 10156 Torino (IT)
(72) Inventor: Malvano, Massimo, 10126 Torino (IT)
(74) Representative: Franzolin, Luigi

(56) References cited:
- DE-A1- 19 943 539
- DE-A1-102007 001 899
- FR-A1- 2 910 429
- US-A1- 2004 178 663
- US-B1- 6 213 531

## Description

### Application field of the invention

The present invention refers to a vehicle cabin with telescopic rear part, especially of industrial or commercial vehicle.

### Description of the prior art

The rear part of a cabin of an industrial or commercial vehicle has a fixed configuration in terms of width of the rear part, determined by the initial definition of the usage purpose of the vehicle.

When the priority is to carry more passengers or to privilege the driver's or the passenger's comfort, the rear part has an elongated configuration in order to contain further seats or beds. This determines a limitation of the loading capacity, the length of the vehicle being the same.

On the contrary if the priority is to increase the carrying capacity, the rear part has a narrowed configuration, the length of the vehicle being the same. This determines a limitation of the internal habitableness, the length of the vehicle being the same.

Anyway the initial definition of the internal volume of the cabin cannot be modified, except by expensive and unlikely structural interventions. Hence also the usage purpose of the vehicle cannot be modified, therefore limiting the adapting capacity of the vehicle to the different needs arising in its lifetime.

In some solutions known in the art, the cabin comprises a rear part movable between an operative position completely retracted inside the cabin to a position completely extended outside the cabin. Examples of a cabin comprising a movable rear part are disclosed in DE 102007001899 and US 2004/178663.

### Summary of the invention

The aim of the present invention is to provide a vehicle cabin with telescopic rear part suitable for overcoming all the drawbacks mentioned above.

The object of the present invention is in particular to a vehicle cabin with telescopic rear part, as described more fully in the claims, which are an integral part of this description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a side section view of the vehicle cabin with telescopic rear part that is object of the present invention;
figures 2 and 3 show axonometric views of a part of the inside of the telescopic rear part, respectively in open and closed position, with an enlarged view of a structural detail;
figures 4 and 5 show section views of details of the system for moving the telescopic rear part;
figures 6 and 7 show section views of details of the system for blocking the telescopic rear part.

In the drawings the same reference numbers and letters identify the same elements or components.

### Detailed description of preferred embodiments of the invention

The basic idea of the present invention is to make telescopic the rear part of the cabin, so that its internal volume can be adapted to the different needs arising in the lifetime of the vehicle.

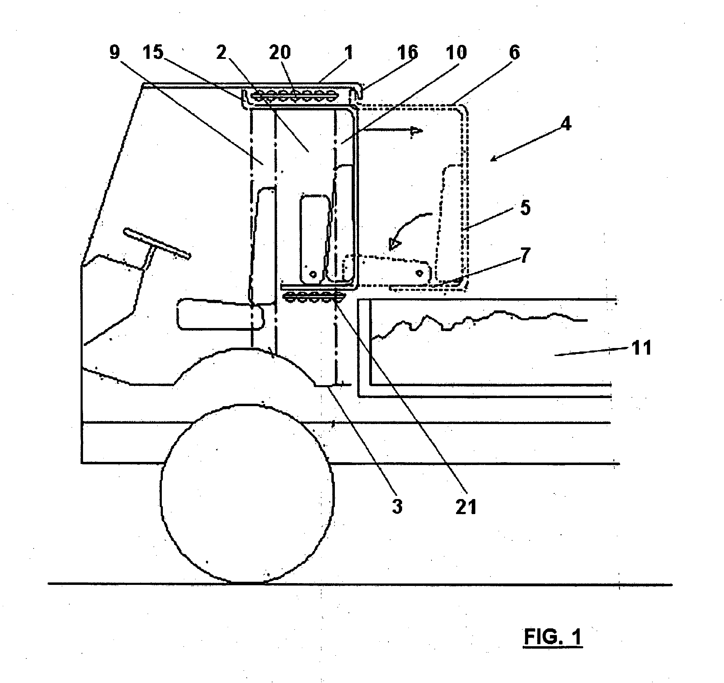

As it can be seen in figure 1, the rear wall of the cabin integrates parts of the body side, of the roof panel and of the floor in order to generate a sliding self-supporting box-type structure 4.

In configuration of restricted cabin, the parts of the body side, of the roof panel and of the floor integrated in the rear wall, are retracted within analogous parts of the cabin, while in configuration of enlarged cabin, they stretch outside the analogous parts of the cabin.

Moreover the sliding part is made only in the upper part of the cabin, so that the floor of the box-type structure is on a upper level with respect to the edge of the body of the vehicle, in order to reduce as less as possible the carrying capacity, so that it is possible to use the extended configuration also when the carried materials occupy just the space within the boards 11.

With reference to the figures, the cabin externally comprises a roof panel 1, the body sides 2, a floor 3. Its rear part is open in order to accommodate the sliding self-supporting 4, which is in its turn equipped with roof board 6, body sides 8, floor 7, and rear wall 5, whose dimensions are slightly smaller than the external dimensions of the cabin, so that it can penetrate inside the cabin itself.

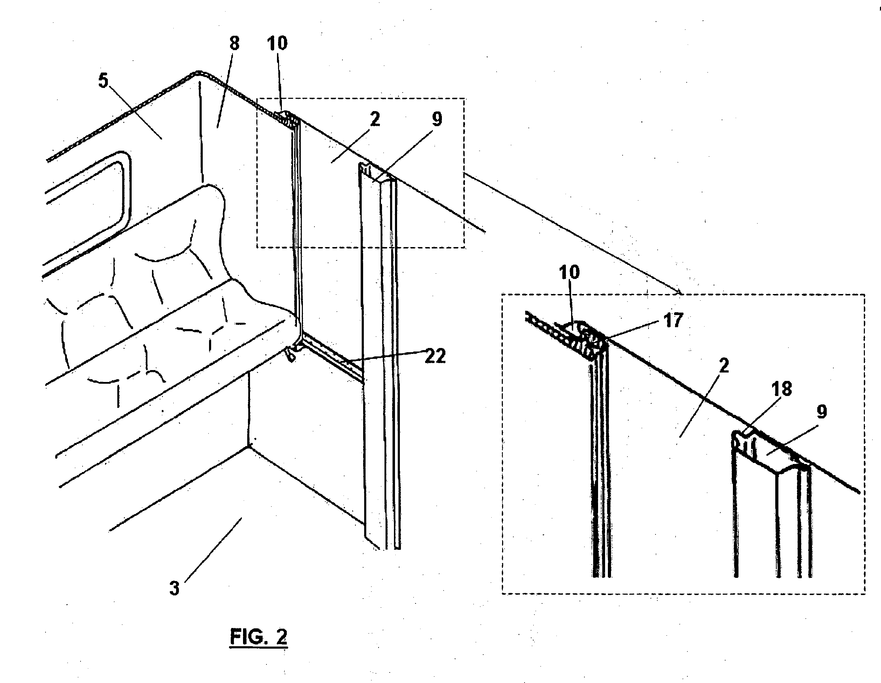

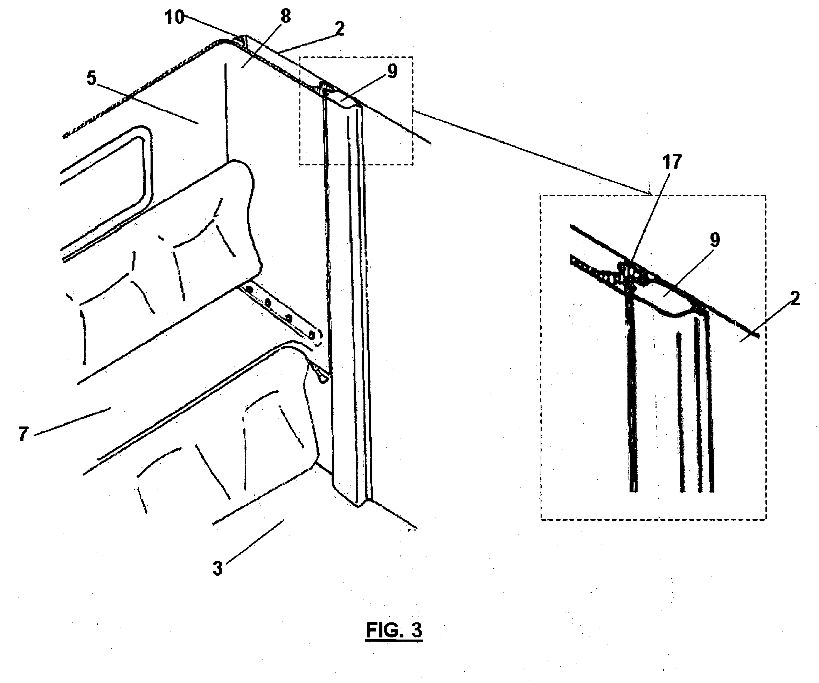

Inside the box-type structure, seats, beds or other elements may be present. For example in the figures a folding bed is shown that may be unfolded (fig. 2) in the condition of extended cabin, or it may be folded (fig. 3) in the condition of restricted cabin.

In the internal part of the external side walls 2 of the cabin there are two reinforcing vertical stanchions in such a position that they engage the edge of the box-type structure in both positions of extended and restricted cabin. In particular there is a pair of stanchions in intermediate position and a pair of stanchions in terminal position on the opposite sides of the cabin (in the figures just one side is shown).

The telescopic part must not damage the structural resistance of the cabin, hence its profile is shaped so that it guarantees its closing by means of seals, forming a box.

For example, the edge of the roof panel comprises in its upper part a folding towards the outside 15, with a seal, suitable for engaging with a respective folding towards the inside 16 in the rear edge of the cabin, in enlarged configuration.

In the side parts, the edges of the box-type structure comprise foldings 17 of the profiles engaging with foldings having complementary shape 18 in the two stanchions 9 or 10, respectively in closed or open position, guaranteeing the closing with seal and forming a box. There is therefore a rib, which creates a seal with an interpenetrating double profile.

The sliding of the box-type structure is guaranteed by telescopic guides with rollers and rails. Preferably there are a pair of guides 20 on the sides of the upper edge and a pair of guides 21 on the sides of the lower edge of the box-type structure, which slide on rails 22 fixed in corresponding internal positions of the external side walls of the cabin.

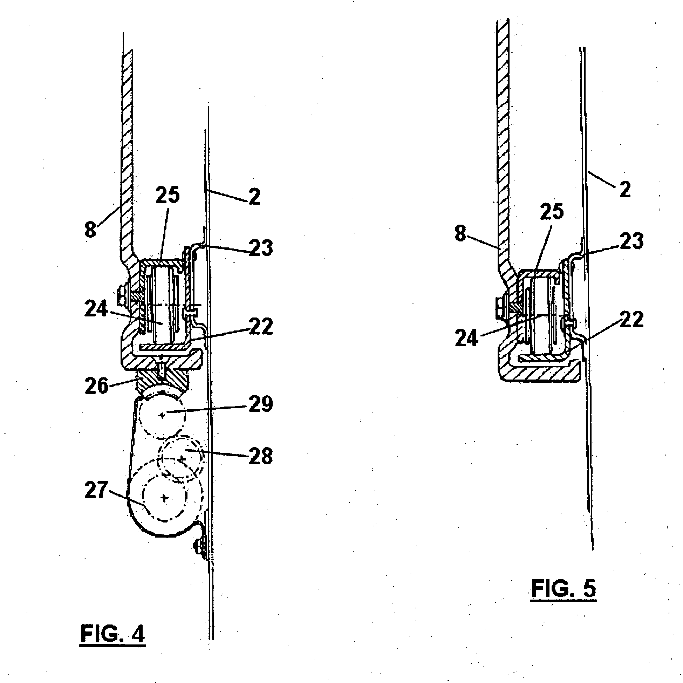

With reference to figures 4 and 5, the sliding rail 22, L-shaped, is fixed to the internal part of the bodywork 2 by means of an omega-shaped profile 23 placed between them and spot welded, so that it does not have any screwhead or fixing point in its external part. Edge rails 25, shaped as an overturned L, are fixed to the sliding part, for example they are screwed.

Wheels or rolling bearings 24, fixed to the edge of the wall 8 of the box-type structure, guarantee the sliding between rails and edge rails.

The sliding may be manual, or (fig. 4) electrically driven by a rack guide 26 fixed under the telescopic part on a folding of a wall 8, with electric engine 27 with worm 29 reduction unit 28, fixed in the fixed internal part 2 of the cabin, under the telescopic part.

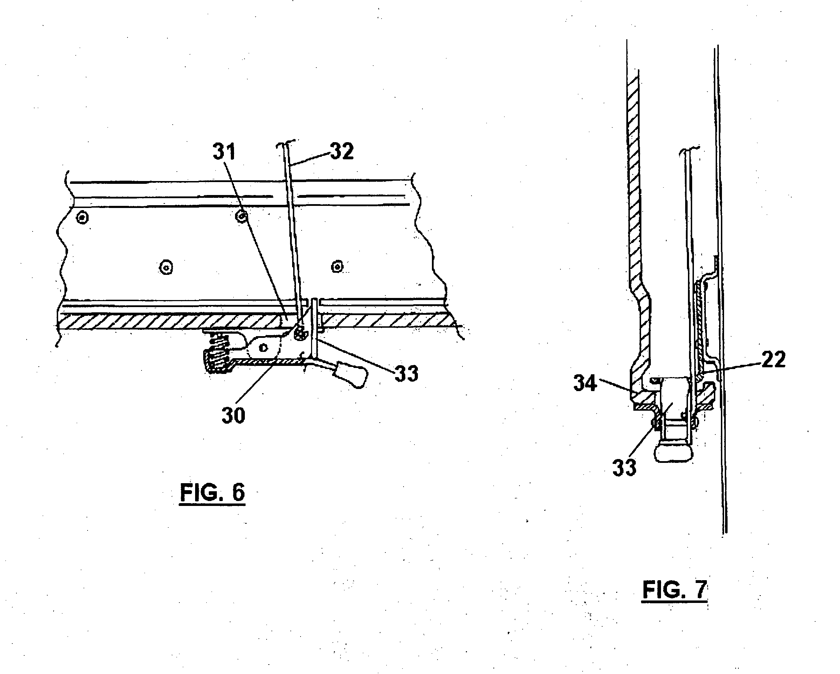

With reference to figures 6 and 7, there is a system for blocking the box-like structure in the two positions: all-open and all-closed.

The system includes spring and lever latches 30, which engage with holes in the guides 31, and tension rods 32 which guarantee the closing. The engagement 33 passes through both the lower folding of the mobile part 34 and the fixed rail 22. The system is applied to the four sides of the structure, with engagements at the two ends.

The advantages deriving from the use of this invention are evident.

This type of cabin allows to extend the rear part of the cabin, increasing the number of seats without reducing the carrying capacity, for materials which do not exceed the maximum height of the boards of the body in the part under the extension of the cabin.

From the description set forth above it will be possible for the person skilled in the art to embody the invention with no need of describing further construction details.

## Claims

1. Vehicle cabin comprising a telescopic rear part (4), and means for moving said telescopic rear part from a position completely retracted inside the rear part of the cabin, to a position completely extended of said rear part of the cabin, said cabin comprising external side walls (2) and said telescopic rear part (4) having a box-type structure provided with edges, **characterized in that** said cabin comprises, in the internal part of said external side walls (2), reinforcing vertical stanchions (9, 10) such that they engage with one of said edges of said telescopic rear part (4) in both completely retracted and extended positions.

2. Vehicle cabin as in claim 1, wherein said telescopic rear part (4) is such that it has a floor (7) at a upper level with respect to the upper edge of the vehicle body (11), so that it can telescopically slide over the latter.

3. Vehicle cabin as in claim 1, wherein said means for moving said telescopic rear part comprise telescopic guides with rollers and rails (22, 23, 24, 25).

4. Vehicle cabin as in claim 3, wherein said means for moving said telescopic rear part are electrically driven (26, 27, 28, 29).

5. Vehicle cabin as in claim 3, wherein said means for moving said telescopic rear part comprise a system for blocking (30, 31, 32, 33) said telescopic rear part in both completely retracted and extracted positions.

6. Vehicle cabin according to Claim 1, wherein a pair of stanchions is arranged in a intermediate position and a pair of stanchions in a terminal position on the opposite sides of the cabin.

7. Vehicle cabin according to Claim 1, wherein said edges of said box-type structure comprise foldings (17) engaging with foldings having complementary shape (18) of said stanchions (9,10).

## Patentansprüche

1. Fahrzeugkabine, umfassend einen teleskopischen hinteren Teil (4) und Mittel zur Bewegung dieses teleskopischen hinteren Teils aus einer Position, in der er vollständig in den hinteren Teil der Kabine eingezogen ist, in eine Position, in der er vollständig aus dem hinteren Teil der Kabine ausgezogen ist, welche Kabine äußere Seitenwände (2) aufweist, und welcher teleskopische hintere Teil (4) eine kastenartige Struktur aufweist, die mit Kanten versehen ist, **dadurch gekennzeichnet, dass** die Kabine in dem inneren Teil der äußeren Seitenwände (2) vertikale Verstärkungsstützen (9,10) aufweist, derart, dass diese mit einer der Kanten des teleskopischen hinteren Teils (4) sowohl in der vollständig eingezogenen Position als auch der ausgezogenen Position zusammenwirken.

2. Fahrzeugkabine gemäß Anspruch 1, bei welcher der teleskopische hintere Teil (4) derart ausgebildet ist, dass er einen Boden (7) auf einem höheren Niveau als die obere Kante des Fahrzeugkorpus (11) aufweist, so dass er teleskopisch über den letzteren gleiten kann.

3. Fahrzeugkabine gemäß Anspruch 1, bei welcher die Mittel zum Bewegen des teleskopischen hinteren Teils teleskopische Führungen mit Rollen und Schienen (22,23,24,25) umfassen.

4. Fahrzeugkabine gemäß Anspruch 3, bei welcher die Mittel zum Bewegen des teleskopischen hinteren Teils elektrisch angetrieben sind (26,27,28,29).

5. Fahrzeugkabine gemäß Anspruch 3, bei welcher die Mittel zum Bewegen des teleskopischen hinteren Teils ein System zum Blockieren (30,31,32,33) des teleskopischen hinteren Teils sowohl in der vollständig eingezogenen als auch in der ausgezogenen Position umfassen.

6. Fahrzeugkabine gemäß Anspruch 1, bei welcher ein Paar von Stützen in einer mittleren Position angeordnet ist und ein Paar von Stützen in einer Endposition an den gegenüberliegenden Seiten der Kabine angeordnet ist.

7. Fahrzeugkabine gemäß Anspruch 1, bei welcher Kanten der kastenartigen Struktur Faltungen (17) umfassen, die mit Faltungen mit einer komplementären Form (18) der Stützen (9,10) zusammenwirken.

## Revendications

1. Cabine de véhicule comprenant une partie arrière télescopique (4), et des moyens destinés à déplacer ladite partie arrière télescopique depuis une position complètement rétractée à l'intérieur de la partie arrière de la cabine jusqu'à une position complètement étendue de ladite partie arrière de la cabine, ladite cabine comprenant des parois latérales externes (2) et ladite partie arrière télescopique (4) possédant une structure de type boîte dotée de bords, **caractérisée en ce que** ladite cabine comprend, dans la partie interne desdites parois latérales externes (2), des montants verticaux de renforcement (9, 10) de telle sorte qu'ils entrent en prise avec l'un desdits bords de ladite partie arrière télescopique (4) à la fois dans la position complètement rétractée et dans la position complètement étendue.

2. Cabine de véhicule selon la revendication 1, dans laquelle ladite partie arrière télescopique (4) est telle qu'elle possède un plancher (7) à un niveau supérieur par rapport au bord supérieur de la carrosserie (11) du véhicule, de sorte qu'il puisse coulisser de façon télescopique par-dessus celui-ci.

3. Cabine de véhicule selon la revendication 1, dans laquelle lesdits moyens destinés à déplacer ladite partie arrière télescopique comprennent des guides télescopiques à rouleaux et glissières (22, 23, 24, 25).

4. Cabine de véhicule selon la revendication 3, dans laquelle lesdits moyens destinés à déplacer ladite partie arrière télescopique sont électriquement entraînés (26, 27, 28, 29).

5. Cabine de véhicule selon la revendication 3, dans laquelle lesdits moyens destinés à déplacer ladite partie arrière télescopique comprennent un système destiné à bloquer (30, 31, 32, 33) ladite partie arrière télescopique à la fois dans la position complètement rétractée et dans la position complètement étendue.

6. Cabine de véhicule selon la revendication 1, dans laquelle une paire de montants est agencée dans une position intermédiaire et une paire de montants dans une position terminale sur les côtés opposés de la cabine.

7. Cabine de véhicule selon la revendication 3, dans laquelle lesdits bords de ladite structure de type boîte comprennent des pliages (17) entrant en prise avec des pliages ayant une forme complémentaire (18) desdits montants (9, 10).
